Europäisches Patentamt

(19) European Patent Office

Office européen des brevets

(11) Numéro de publication: **0 106 774
B1**

(12) **FASCICULE DE BREVET EUROPEEN**

(45) Date de publication du fascicule du brevet:
03.06.87

(21) Numéro de dépôt: 83420159.2

(22) Date de dépôt: 06.10.83

(51) Int. Cl.⁴: **B 21 D 37/04**, B 21 D 28/26

(54) **Agencement de tourelles pour poinçonneuses-grignoteuses.**

(30) Priorité: 13.10.82 FR 8217500

(43) Date de publication de la demande:
25.04.84 Bulletin 84/17

(45) Mention de la délivrance du brevet:
03.06.87 Bulletin 87/23

(84) Etats contractants désignés:
AT BE CH DE GB IT LI LU NL SE

(56) Documents cités:
DE - A - 1 752 369
DE - B - 2 264 852

(73) Titulaire: PICOT S.A., 160 rue Joliot Curie, F-69160 Tassin
la Demi Lune (Rhône) (FR)

(72) Inventeur: Lafrasse, Jean, 8 allée de la Fauvette,
F-69570 Dardilly (FR)
Inventeur: Chastan, Jean Paul, 38 avenue des Sources,
F-69130 Ecully (FR)

(74) Mandataire: Maureau, Pierre, Cabinet GERMAIN &
MAUREAU Le Britannia - Tour C 20, Boulevard E.
Déruelle, F-69003 Lyon (FR)

**Description**

La présente invention se rapporte à un agencement de tourelles pour poinçonneuses-grignoteuses, destinées à l'usinage de la tôle, avec une table à mouvements croisés et avec deux tourelles d'axe vertical, l'une supérieure et l'autre inférieure, portant respectivement des poinçons et des matrices.

Une poinçonneuse-grignoteuse de ce genre est connue par exemple par le document DE-B 2 264 852. Il est ici rappelé qu'une poinçonneuse-grignoteuse à tourelles, telle que décrite dans ce document, est une machine-outil réalisée avec commande numérique, possédant un bâti avec système de frappe sur lequel sont montées tournantes, autour d'un même axe de rotation vertical, deux tourelles l'une supérieure et l'autre inférieure, portant des jeux d'outils interchangeables. Sur la tourelle supérieure sont montés des porte-poinçons avec leurs poinçons ainsi que des systèmes de dévêtissage et de remontée des outils. La tourelle inférieure porte, en regard des poinçons, des matrices correspondantes avec leurs systèmes d'immobilisation. Cet ensemble permet de réaliser des trous et autres découpes de formes diverses dans des tôles maintenues et déplacées sur la table à mouvements croisés, avec une poutre à déplacement longitudinal le long de laquelle coulisse un chariot à déplacement transversal, muni de pinces de préhension de la tôle qui est ainsi amenée et déplacée entre les deux tourelles.

Le bâti peut être réalisé en «arcade», comme indiqué dans le document DE-B 2 264 852, ou en «col de cygne», cette dernière disposition étant montrée par exemple par le document DE-A 1 752 369.

Dans toutes les réalisations connues, telles que celles indiquées par les documents précédents, les deux tourelles sont coaxiales et situées par conséquent l'une exactement en regard de l'autre; ainsi il subsiste entre les deux tourelles un espace libre très réduit, de quelques centimètres de hauteur. L'accès aux outils est donc malaisé, ce qui rend les opérations de remplacement manuel des outils très difficiles, notamment pour les matrices, et interdit pratiquement l'automatisation du changement d'outils. Pour essayer de faciliter la mise en place des outils sur les tourelles, on a été conduit jusqu'à présent à employer des artifices de fixation qui en augmentent le coût. En plus des difficultés d'accès aux outils, le rapprochement des deux tourelles entraîne aussi une difficulté de vision pour l'opération d'indexage des matrices de forme, difficulté pouvant conduire à un montage incorrect.

La présente invention vise à éliminer ces inconvénients des machines connues, et son but est de fournir une disposition particulière des tourelles qui, pratiquement sans aucune complication constructive, rende l'accès à ces tourelles très aisé, dans les zones portant les outils, et facilite grandement le changement des porte-poinçons de la tourelle supérieure et surtout des matrices de la tourelle inférieure.

A cet effet, dans l'agencement de tourelles pour poinçonneuses-grignoteuses selon la présente invention, appartenant au genre indiqué en introduction, la tourelle supérieure et la tourelle inférieure sont montées tournantes respectivement autour de deux axes de rotation verticaux non pas confondus mais au contraire décalés d'une certaine distance horizontale, de sorte que chaque tourelle possède une zone en débordement par rapport à l'autre tourelle.

On comprend que les outils de la tourelle inférieure par exemple, lorsqu'ils sont amenés dans la zone de débordement de cette tourelle, seront très facilement accessibles puisqu'aucune partie de la tourelle supérieure ne se trouvera alors en regard de ces outils. Ainsi, la mise en place et l'échange des outils – poinçons et matrices – est facilité, à tel point qu'il devient possible d'effectuer un changement automatique des outils.

Par rapport aux réalisations classiques, il va de soi que compte tenu du décalage des axes des deux tourelles les poinçons d'une part et les matrices d'autre part, considérés en projection sur un plan horizontal, ne seront plus répartis sur deux ou plusieurs cercles concentriques, mais sur des cercles sécants. L'un des points d'intersection de ces cercles définit la position de l'axe de travail de la machine: il suffira d'amener un poinçon et la matrice correspondante sur cet axe, ce qui est toujours possible, pour effectuer l'opération désirée de poinçonnage ou de grignotage. La coïncidence du poinçon et de la matrice sur l'axe de travail, malgré le décalage des axes de rotation des deux tourelles, sera assurée sans difficulté par un système d'indexage de ces tourelles dans les positions angulaires appropriées.

De préférence, le décalage de l'axe de rotation d'une tourelle par rapport à l'axe de rotation de l'autre tourelle est orienté suivant une direction sensiblement transversale, relativement à la machine. La zone de débordement d'une tourelle par rapport à l'autre est ainsi située latéralement, donc très accessible depuis un côté de la machine. De plus, selon le nombre de pistes circulaires sur lesquelles sont répartis les outils, le ou les points d'intersection correspondant à l'axe de travail utilisé seront, grâce à cette disposition, placés vers l'avant du col de cygne du bâti, dans le plan médian longitudinal de la machine, donc dans la zone la plus favorable.

De toute façon, l'invention sera mieux comprise à l'aide de la description qui suit, en référence au dessin schématique annexé représentant, à titre d'exemple non limitatif, une forme de réalisation de cet agencement de tourelles pour poinçonneuses-grignoteuses:

Figure 1 est une vue de côté, très schématique, d'une poinçonneuse-grignoteuse pourvue de l'agencement de tourelles selon l'invention;

Figure 2 est une vue en coupe transversale de la machine de figure 1, montrant le décalage des axes des tourelles et illustrant l'accessibilité des outils;

Figure 3 est une vue en plan par-dessus de cette machine, montrant les positions des poinçons et des matrices sur des cercles sécants, ainsi que l'axe de travail défini par l'intersection de ces cercles.

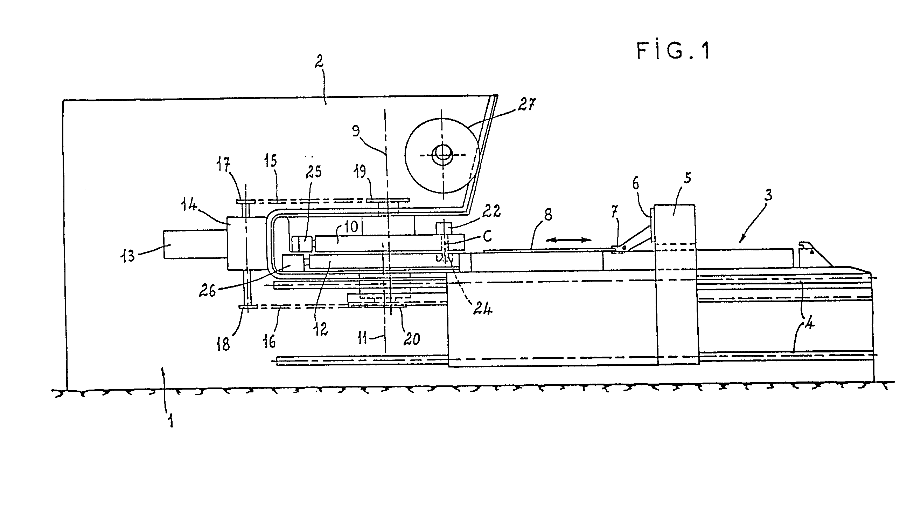

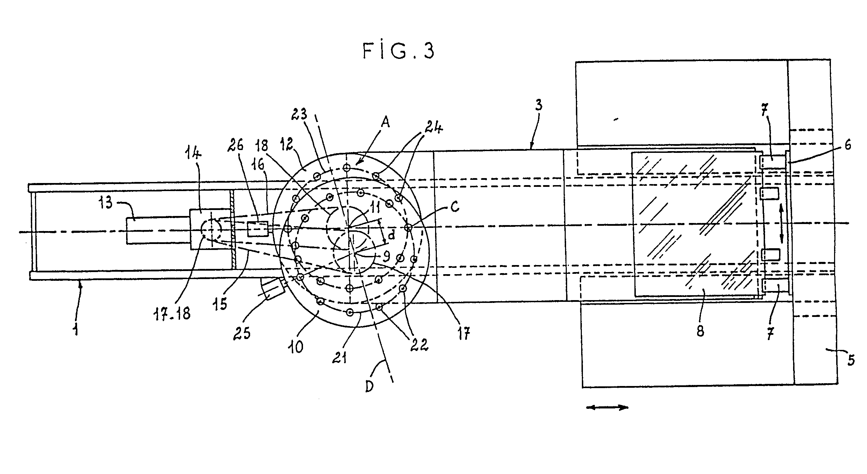

Les figures 1 et 3 montrent, dans son ensemble, une poinçonneuse-grignoteuse avec un bâti 1 col de cygne 2, surmontant une table de travail horizontale 3 à mouvements croisés. Sur cette table 3 est déplaçable, le long de guides longitudinaux 4, une poutre transversale 5 le long de laquelle coulisse un chariot 6 muni de pinces de préhension 7 permettant de saisir la tôle à usiner 8 et de l'amener dans l'espace libre situé entre le col de cygne 2 et la partie inférieure du bâti 1.

Sur le col de cygne 2 est montée tournante, autour d'un axe de rotation vertical 9, une première tourelle 10 porteuse d'outils. Sur la partie du bâti 1 située au-dessous du col de cygne 2 est montée tournante, autour d'un axe de rotation vertical 11, une seconde tourelle 12 porteuse d'outils.

Les deux tourelles 10, 12 sont entraînées en rotation, autour de leurs axes respectifs 9, 11, à partir d'un même moteur 13 associé à un réducteur 14, par l'intermédiaire de deux chaînes sans fin 15, 16 passant sur des pignons moteurs respectifs 17, 18 et sur des roues dentées respectives 19, 20.

La tourelle supérieure 10 porte, répartis sur au moins un cercle 21 centré sur son axe 9, une série de poinçons 22. La tourelle inférieure 12 porte, répartis sur au moins un cercle 23, une série de matrices 24 dont chacune correspond à l'un des poinçons 22 de la tourelle supérieure 10.

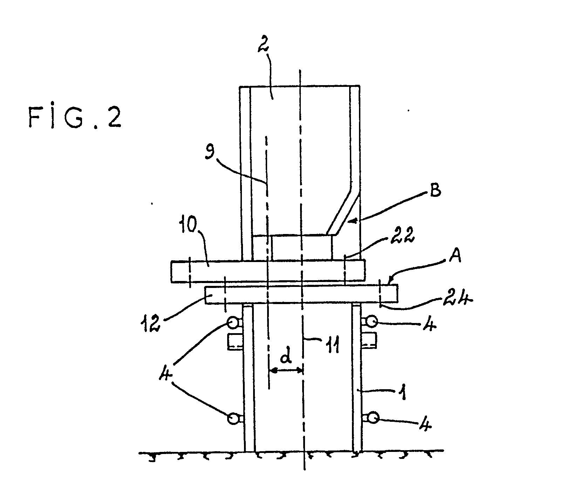

Comme le montrent notamment les figures 2 et 3, les axes de rotation verticaux 9, 11 de la tourelle supérieure 10 et de la tourelle inférieure 12 ne sont pas confondus, mais sont au contraire décalés d'une certaine distance horizontale d. Plus particulièrement, le décalage d de l'axe 9 de la tourelle supérieure 10 par rapport à l'axe 11 de la tourelle inférieure 12 est orienté suivant une direction D sensiblement transversale, relativement à la machine.

Il en résulte que la tourelle inférieure 12 présente, par rapport à la tourelle supérieure 10, une zone en débordement A située sur l'un des côtés du bâti 1. Cette disposition, complétée éventuellement par un dégagement B dans le col de cygne 2, permet un accès aisé aux outils et notamment aux matrices, pour leur montage et leur échange – voir figure 2.

En se référant à la figure 3, on note que les cercles 21, 23 sur lesquels sont répartis les outils, supposés projetés sur un même plan horizontal, sont sécants en deux points dont l'un C est situé dans le plan médian longitudinal de la machine, vers l'avant du col de cygne 2. Par rotation des deux tourelles 10, 12 autour de leurs axes respectifs 9, 11 chaque poinçon peut être amené, en même temps que la matrice 24 correspondante, sur l'axe de travail vertical défini par le point C. Les deux tourelles 10, 12 étant amenées dans la position angulaire désirée en vue d'une opération particulière de poinçonnage ou de grignotage à effectuer en un point déterminé de la tôle 8, un premier vérin d'indexage 25 maintient la tourelle supérieure 10 dans sa position, tandis qu'un second vérin d'indexage 26 maintient la tourelle inférieure 12 dans sa position. Le système de frappe 27, porté par le col de cygne 2, peut alors intervenir pour presser le poinçon 22 en direction de la matrice 24.

Comme il va de soi, l'invention comme revendiquée ne se limite pas à la seule réalisation particulière de cet agencement de tourelles qui a été décrite ci-dessus, à titre d'exemple; elle en embrasse, au contraire, toutes les variantes de construction et d'application fondées sur le même principe de décalage des axes de rotation des deux tourelles. Ainsi, la même disposition est applicable à des poinçonneuses-grignoteuses avec bâtis et tables de tous types, et quel que soit le nombre des pistes circulaires sur lesquels sont respectivement répartis sur les deux tourelles les poinçons et les matrices, du moment que malgré le décalage des axes desdites tourelles ces pistes restent sécantes de manière à définir un ou plusieurs axes de travail.

**Revendications**

1. Agencement de tourelles pour poinçonneuses-grignoteuses, destinées à l'usinage de la tôle, avec une table à mouvements croisés (3) et avec deux tourelles (10, 12) d'axe vertical, l'une supérieure et l'autre inférieure, portant respectivement des poinçons (22) et des matrices (24), caractérisé en ce que la tourelle supérieure (10) et la tourelle inférieure (12) sont montées tournantes respectivement autour de deux axes de rotation verticaux (9, 11) non pas confondus mais au contraire décalés d'une certaine distance horizontale (d), de sorte que chaque tourelle (10, 12) possède une zone (A) en débordement par rapport à l'autre tourelle.

2. Agencement de tourelles pour poinçonneuses-grignoteuses selon la revendication 1, caractérisé en ce que le décalage (d) de l'axe de rotation (9) d'une tourelle (10) par rapport à l'axe de rotation (11) de l'autre tourelle (12) est orienté suivant une direction sensiblement transversale (D), relativement à la machine.

**Patentansprüche**

1. Anordnung von Revolverköpfen an Lochstanzen, die für die Blechbearbeitung bestimmt sind, mit einem Kreuztisch (3) und mit einem oberen und einem unteren Revolverkopf (10 bzw. 12) mit vertikaler Achse, die jeweils Stempel (22) und Matrizen (24) tragen, dadurch gekennzeichnet, dass der obere Revolverkopf (10) und der untere Revolverkopf (12) jeweils um eine von zwei vertikalen Rotationsachsen (9, 11) drehbar befestigt sind, die nicht übereinstimmen, sondern im Gegenteil um einen bestimmten Horizontalabstand (d) versetzt sind, derart, dass jeder Revolverkopf (10, 12) eine mit Bezug auf den anderen Revolverkopf überstehende Zone (A) besitzt.

2. Anordnung von Revolverköpfen an Lochstanzen nach Anspruch 1, dadurch gekennzeichnet, dass die Versetzung (d) der Rotationsachse (9) des einen Revolverkopfes (10) mit Bezug auf die Rotationsachse (11) des anderen Revolverkopfes (12) gemäss einer relativ zur Maschine im wesentlichen quer verlaufenden Richtung (D) orientiert ist.

## Claims

1. An arrangement of turrets for punching machines intended to operate on sheet metal, comprising a bed (3) for perpendicular movements and two turrets (10, 12) each having a vertical axis, namely an upper turret and a lower turret, respectively carrying punches (22) and dies (24), characterised in that the upper turret (10) and the lower turret (12) are rotatable about respective vertical axes of rotation (9, 11), not registering with each other but offset by a horizontal distance (d), so that each turret (10, 12) has an area (A) projecting beyond the other turret.

2. An arrangement of turrets for punching machines according to claim 1, characterised in that the offset distance (d) separating the axis of rotation (9) of one turret (10) from the axis of rotation (11) of the other turret (12) is extending in a direction (D) generally transverse to the major direction of the machine.

FIG.1

FİG.2

FIG.3